Europäisches Patentamt

European Patent Office

Office européen des brevets

(11) Publication number: **0 050 966**
**B1**

# EUROPEAN PATENT SPECIFICATION

(45) Date of publication of patent specification: **02.10.85**

(21) Application number: **81304998.8**

(22) Date of filing: **23.10.81**

(51) Int. Cl.⁴: **H 02 H 9/04, H 02 H 9/06**

(54) **Protection circuit for a power distribution system.**

(30) Priority: **24.10.80 US 200432**

(43) Date of publication of application:
**05.05.82 Bulletin 82/18**

(45) Publication of the grant of the patent:
**02.10.85 Bulletin 85/40**

(84) Designated Contracting States:
**AT BE CH DE FR GB IT LI LU NL SE**

(56) References cited:
**DE-A-2 912 415**
**DE-B-2 034 392**
**FR-A-2 386 175**
**GB-A-1 310 354**
**GB-A-1 436 625**
**US-A-3 934 175**

(73) Proprietor: **ONEAC Corporation**
**2207 Lakeside Drive**
**Bannockburn Illinois 60015 (US)**

(72) Inventor: **McCartney, Thomas**
**1700 Mountain Court**
**Deerfield Illinois 60015 (US)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

EP 0 050 966 B1

## Description

This invention relates to circuitry for protecting power distribution systems.

Protective circuitry is known in which transient voltage suppressors, each of which has a forward diode characteristic in one direction and a reverse voltage clamping characteristic in the other direction, are connected across multiple conductor alternating-current power systems so that each suppressor is connected between a common node and a conductor of the system, the forward diode characteristic directions of the suppressors being similarly directed in relation to the said common node. As a result, when a breaker such as a fuse is positioned in only one of those conductors, normally a live conductor, the failure of any of the suppressors in the protection circuitry activates the breaker. Such circuitry is disclosed in British Patent Specification GB—A—1310354.

A capacitor can be advantageously connected across a voltage suppressor, as suggested in German Patent Specification DE—A—2912415. However a problem encountered in power distribution systems is that line filters are sometimes unreliable because capacitors connected across the aforementioned suppressors are subjected to large transient voltages that can cause failure of the capacitors.

According to one aspect of the present invention there is provided protective circuitry for a power distribution system of the type having at least three conductors and including an over-current circuit-breaking device, connected in a live conductor of the system, and transient protection devices connected respectively between a common node and each of the said conductors of the system, each of the said transient protection devices comprising a transient voltage suppressor having a forward diode characteristic in one direction and a reverse voltage clamping characteristic in the other direction, and those suppressors being connected so that their respective forward diode characteristic directions are similarly directed in relation to the said common node, characterised in that each transient protection device further comprises a polarized capacitor connected in parallel across the suppressor of the device, with the forward diode characteristic direction of the suppressor being directed from the negative polarity terminal to the positive polarity terminal of the capacitor.

The capacitors are protected by the ability of the suppressors to shunt the capacitors quickly in response to surges or transients.

In applications where AC capacitors are required, polarized capacitors have hitherto not been regarded as suitable because they are not designed to withstand substantial reverse voltage conditions.

According to another aspect of the present invention there is provided a capacitive device, for use in alternating current circuitry, characterised in that it comprises two polarized capacitors connected respectively in parallel with two transient voltage suppressors, each of which suppressors has a forward diode characteristic in one direction and a reverse voltage clamping characteristic in the other direction; the connections between each said transient voltage suppressor and the polarized capacitor in parallel therewith being such that the forward diode characteristic direction of the transient voltage suppressor is directed from the negative polarity terminal to the positive polarity terminal of the capacitor concerned; and the transient voltage suppressors, with their respective parallel capacitors, being connected to a common node so that the respective forward diode characteristic directions of the transient voltage suppressors are similarly directed in relation to the said common node.

Such a device can be used in a power distribution system protection and filtering circuit arrangement, since it can enable polarized capacitors to be used in high voltage alternating-current applications.

The use of polarized capacitors in this manner, in AC circuits, can serve to reduce the likelihood of damage to filter capacitors from voltage transients and surges.

Reference will now be made, by way of example, to the accompanying drawings, in which:

FIG. 1 is a circuit schematic showing protective circuitry embodying the present invention;

FIG. 2 is a circuit schematic of a capacitive device embodying another aspect of the present invention; and

FIG. 3 is a circuit schematic showing another device embodying the circuitry of FIG. 2.

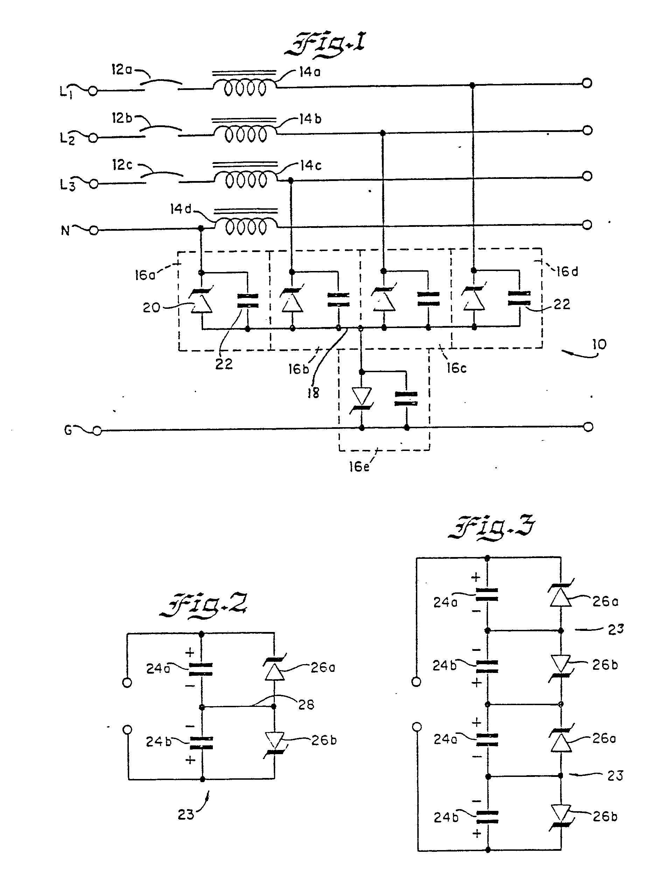

Referring to the drawings wherein like reference characters are used for like parts throughout, there is illustrated in FIG. 1 a three phase high voltage power distribution system or network with live conductors L1 through L3, neutral conductor N, and ground conductor G. Connected across these conductors is protective circuitry 10. Each of the live conductors L1 through L3 includes an over-current protection device such as a fuse or a conventional automatic breaker 12a, 12b or 12c, but the neutral and ground conductors do not include such a circuit-breaking device. In addition, choke input filters comprising inductors 14a, 14b and 14c are serially respectively located in the live conductors L1, L2 and L3, between the AC source (not shown) and the circuitry 10. A further inductor 14d is shown, in the neutral conductor N, but this may be omitted in some embodiments.

The protective circuity 10 includes a plurality of filtering and protection devices 16a through 16e enclosed in broken lines in FIG. 1. These transient protection devices 16 are connected in a wye (Y) arrangement between a common circuit point, or node, provided by line 18 in FIG. 1, and the live conductors L1 through L3, the neutral conductor N and the ground conductor G. With this arrangement even if a fault occurs in any of the devices 16a through 16e such that the device provides a short-circuit, a breaker 12 connected in one of the live conductors will be actuated since each of these devices 16 is connected by way of common node 18 to one of the live conductors including a breaker 12.

Each device 16 includes a transient voltage suppressor 20 and a parallel filter capacitor 22.

The capacitors 22 are polarized capacitors such as electrolytics. Each polarized capacitor has its positive terminal connected to the cathode of the associated suppressor 20. In this way, the polarized capacitors are capable of safe operation in an AC circuit without experiencing reverse voltages that could result in failure of those capacitors 22.

The transient voltage suppressors 20 are preferably silicon p—n junction devices rated for high voltage and current applications. The current-voltage characteristic of each of the suppressors 20 is preferably similar to that of a zener diode, having a forward diode characteristic in one direction and clamping at a given rated voltage in the reverse direction. Suitable transient voltage suppressors are distributed by TRW, 301 West O Street, Ogallala, Nebraska with identifying numbers TVP1500 through TVP1534. Since the clamping time from zero volts to the breakdown voltage is a nanosecond the response of these devices is effectively instantaneous. These suppressors are available with clamping voltages higher than normal line voltages. Each suppressor 20 is arranged to permit forward current flow from the common node 18 into the corresponding one of the conductors L1, L2, L3, N and G, whilst allowing reverse current flow only when a clamping voltage is exceeded.

Each suppressor 20 can also be combined with a parallel surge suppressor (not shown). For example, a shunt diode with a high forward surge rating increases the forward surge rating of the combination by shunting high node-to-line currents across the suppressor 20. The other shunt diode characteristics are not critical, provided that the clamping voltage of the suppressor is less than the reverse breakdown voltage of the shunt diode. Similarly a bi-directional clamp or protection device, such as a gas discharge tube, a metal oxide varistor, a bi-directional transient voltage suppressor or a combination of such devices can be shunted across the suppressor 20 for surge protection. For example, a bi-directional transient voltage suppressor made up of back-to-back p—n junction silicon devices, such as those described above, can be utilized.

The capacitors 22 are protected by the ability of the suppressors 20 to quickly conduct to shunt the capacitor 22 in response to a surge or transient.

As regards other possible embodiments, it should be realized that the wye arrangement of the protection devices 16 is suitable for single phase operation as well as other conductor arrangements of a power distribution network.

FIG. 2 shows a more generally applicable AC capacitive device, or filter network, 23 which may be regarded as equivalent to the parallel arrangement of capacitors 22 and suppressors 20 in Figure 1. The capacitive network 23 of FIG. 2 includes a pair of transient voltage suppressors consisting of diodes 26a and 26b connected in series, anode to anode. A polarized capacitor 24a is connected across diode 26a with the positive terminal of the capacitor 24a connected to the cathode of the diode 26a. Similarly, a polarized capacitor 24b is connected across the diode 26b with the positive terminal of the capacitor 24b connected to the cathode of the diode 26b.

The capacitor 24a on one side of the network and the diode 26b on the other side of the network form one voltage clamper, and the diode 26a together with the capacitor 24b form another voltage clamper. The two voltage clampers are connected together at common node 28 with each diode 26 shunting current flow from common node 28 around their parallel capacitors 24 and preventing either capacitor 24 from discharging. The steady state voltage across the diode 26 of each clamper is therefore the difference between the voltage across the filter network 23 and the voltage across the clamper's capacitor. Thus the voltage across each diode 26 is a non-zero-crossing sinusoid, one positive and one negative, one clamping the positive peak of the applied voltage at zero and the other clamping the negative peak at zero. Although the magnitude of the waveform is dependent on the values of capacitors 24a and 24b, when the capacitors are of equal value, the waveform representing the voltage across each diode 26 has a frequency equal to that of the applied voltage with half the amplitude. Thus each polarized electrolytic capacitor 24 is capable of acting in a high energy alternating current environment without experiencing a destructive reverse voltage. The filter network 23 has an overall effective AC capacitance equal to the product of the capacitances of each capacitor 24 divided by their sum.

Conveniently a very large resistance (not shown) can be connected across the filter network 23 so that the charge trapped on the capacitors 24 will eventually bleed off after a long period of non-use. Such a resistance draws negligible current and does not alter the characteristics of the circuit.

The diodes 26a and 26b can be any suitably rated high voltage p—n junction components, such as conventional diodes or zener diodes. However, in order to avoid overvoltage of the capacitors, transient voltage suppressors such as the silicon transient suppressor discussed above, commercially distributed by TRW, are preferred. The forward diode current of the diodes 26 is effectively zero and the reverse breakdown or clamping voltage should be greater than the D.C. working voltage rating of the capacitors 24 which should at least equal the peak applied voltage.

In an alternative embodiment (not shown) the polarity of the capacitors 24 and diodes 26 can be reversed to form a pair of peak rectifiers one including the capacitor 24a and diode 26b and the other including capacitor 24b and diode 26a. The circuit operation is otherwise identical to that shown in FIG. 2 and described above.

Filter networks 23 as shown in FIG. 2 (or alternative versions as just described, using a peak rectifier arrangement) can be stacked as shown in FIG. 3 to increase the voltage capability of the overall device or to reduce the required ripple current rating of each unit. The filter networks 23 can be stacked to form a ladder network of any desired length with the polarity of the capacitors 24 and the diodes 26 alternating.

## Claims

1. Protective circuitry for a power distribution system of the type having at least three conductors (L1, N, G) and including an over-current circuit-breaking device (12a), connected in a live conductor (L1) of the system, and transient protection devices (16d, 16a, 16e) connected respectively between a common node (18) and each of the said conductors (L1, N, G) of the system, each of the said transient protection devices comprising a transient voltage suppressor (20) having a forward diode characteristic in one direction and a reverse voltage clamping characteristic in the other direction, and those suppressors (20) being connected so that their respective forward diode characteristic directions are similarly directed in relation to the said common node (18), characterised in that each transient protection device (16d, 16a, 16e) further comprises a polarized capacitor (22) connected in parallel across the suppressor (20) of the device, with the forward diode characteristic direction of the suppressor (20) being directed from the negative polarity terminal to the positive polarity terminal of the capacitor (22).

2. Protective circuitry as claimed in claim 1, wherein each of the transient voltage suppressors (20) comprises a varistor in parallel with a diode.

3. Protective circuitry as claimed in claim 1, including surge suppressors shunted respectively across transient voltage suppressors (20).

4. Protective circuitry as claimed in claim 3, wherein each of the said surge suppressors is a bi-directional clamp.

5. Protective circuitry as claimed in claim 3, wherein each of the said surge suppressors is a gas discharge tube.

6. Protective circuitry as claimed in claim 3, wherein each of the said surge suppressors is a varistor.

7. Protective circuitry as claimed in claim 3, wherein each of the said surge suppressors is a bi-directional transient voltage suppressor.

8. Protective circuitry as claimed in claim 1, wherein there is shunted across each said transient voltage suppressor (20) a diode having a forward surge rating higher than that of the transient voltage suppressor and having a reverse breakdown voltage greater than the reverse clamping voltage of the transient voltage suppressor.

9. A capacitive device for use in alternating current circuitry, characterised in that it comprises two polarized capacitors (24a, 24b) connected respectively in parallel with two transient voltage suppressors (26a, 26b), each of which suppressors has a forward diode characteristic in one direction and a reverse voltage clamping characteristic in the other direction; the connections between each said transient voltage suppressor and the polarized capacitor in parallel therewith being such that the forward diode characteristic direction of the transient voltage suppressor is directed from the negative polarity terminal to the positive polarity terminal of the capacitor concerned; and the transient voltage suppressors (26a, 26b), with their respective parallel capacitors (24a, 24b), being connected to a common node (28) so that the respective forward diode characteristic directions of the transient voltage suppressors (26a, 26b) are similarly directed in relation to the said common node (28).

10. A device as claimed in claim 9, wherein the said transient voltage suppressors (26a, 26b) are high voltage silicon p—n junction components.

11. A device as claimed in claim 9, wherein the reverse clamping voltage of each of the said transient voltage suppressors (26a, 26b) is greater than the voltage rating of each of the said capacitors (24a, 24b).

12. A device as claimed in claim 9, 10 or 11, wherein the said capacitors (24a, 24b) are of equal capacitance.

## Revendications

Circuit de protection pour un systeme de distribution d'énergie du type comprenant au moins trois conducteurs (L1, N, G) et comportant un dispositif (12a) de coupure de circuit de surintensité, connecté dans un conducteur sous tension (L1) du système, et des dispositifs de protection de transitoire (16d, 16a, 16e) respectivement connectés entre un borne commune (18) et chacun desdits conducteurs (L1, N, G) du système, chacun desdits dispositifs de protection de transitoire comprenant un dispositif (20) d'élimination de tension de transitoire ayant une caractéristique de diode directe dans une direction et une caractéristique d'écrétage de tension inverse dans l'autre direction, et ces dispositifs d'élimination (20) étant connectés de sorte que leurs directions de caractéristique de diode directe respectives sont dirigées de manière analogue par rapport la ladite borne commune (18), caractérisé en ce que chacun des dispositifs de protection de transitoire (16d, 16a, 16e) comporte en outre un condensateur polarisé (22) connecté en parallèle sur le dispositif d'élimination (20) du dispositif, avec la direction de caractéristique de diode directe du dispositif d'élimination (20) dirigée de la borne de polarité négative vers la borne de polarité positive du condensateur (22).

2. Circuit de protection selon la revendication 1, dans lequel chacun des dispositifs d'élimination de tension de transitoire (20) comprend un varistor en parallèle avec une diode.

3. Circuit de protection selon la revendication 1, comportant des dispositifs d'élimination d'urgence shuntés respectivement par des dispositifs d'élimination de tension de transitoire (20).

4. Circuit de protection selon la revendication 3, dans lequel chacun desdits dispositifs d'élimination d'urgence est un écréteur bidirectionnel.

5. Circuit de protection selon la revendication 3, dans lequel chacun desdits dispositifs d'élimination d'urgence est un tube à décharge de gaz.

6. Circuit de protection selon la revendication 3, dans lequel chacun desdits dispositifs d'élimination d'urgence est un varistor.

7. Circuit de protection selon la revendication 3, dans lequel chacun desdits dispositifs d'élimination d'urgence est un dispositif d'élimination de tension de transitoire bidirectionnel.

8. Circuit de protection selon la revendication 1, dans lequel une diode est connectée aux bornes de chacun des dispositifs d'élimination (20) de tension de transitoire, cette diode ayant une plage d'urgence directe plus grande que celle des dispositifs d'élimination de tension de transitoire et ayant une tension de rupture inverse supérieure à la tension d'écrétage inverse du dispositif d'élimination de tension de transitoire.

9. Dispositif capacitif destiné à être utilisé dans un circuit à courant alternatif, caractérisé en ce qu'il comporte deux condensateurs polarisés (24a, 24b) connectés respectivement en parallèle sur deux dispositifs d'élimination de tension de transitoire (26a, 26b), chacun des dispositifs d'élimination ayant une caractéristique de diode directe dans une direction et une caractéristique d'écrétage de tension inverse dans l'autre direction, les connexions entre chacun desdits dispositifs d'élimination de tension de transitoire et les condensateurs polarisés en parallèle avec ceux-ci, étant telles que la direction de caractéristique de diode directe du dispositif d'élimination de tension de transitoire est dirigée de la borne de polarité négative vers la borne de polarité positive du condensateur concerné, et les dispositifs d'élimination de tension de transitoire (26a, 26b), avec leur condensateur en parallèle respectif (24a, 24b), étant connectés à une borne commune (28) de sorte que les directions de caractéristique de diode directe respectives des dispositifs d'élimination de tension de transitoire (26a, 26b) sont dirigées de manière analogue par rapport à ladite borne commune (28).

10. Dispositif selon la revendication 9, dans lequel les dits dispositifs d'élimination de tension de transitoire (26a, 26b) sont des composants à jonction p—n de silicium à hautre tension.

11. Dispositif selon la revendication 9, dans lequel la tension d'écrétage inverse de chacun des dispositifs d'élimination de tension de transitoire (26a, 26b) est plus grande que la plage de tension de chacun desdits condensateurs (24a, 24b).

12. Dispositif selon la revendication 9, 10 ou 11, dans lequel lesdits condensateurs (24a, 24b) ont une capacité égale.

**Patentansprüche**

1. Schutzschaltung für ein Energieverteilungssystem mit mindestens drei Leitern (L1, N, G) einer in einem stromführenden Leiter (L1) liegenden Überstrom-Schaltungsunterbrechungsvorrichtung (12a) und Übergangsschutzvorrichtungen, die jeweils zwischen einem gemeinsamen Knoten (18) und jedem Leiter (L1, N, G) des Systems liegen, wobei jede der Übergangsschutzvorrichtungen (16d, 16a, 16e) aus einem Übergangsspannungs-Entstörer (20) besteht, der in einer Richtung eine Vorwärtsdiodencharakteristik und in der anderen Richtung eine Rückwärtsspannungs-Begrenzungscharakteristik aufweist, und die Entstörer (20) derart miteinander verbunden sind, daß ihre jeweiligen Richtungen mit Vorwärtsdiodencharakteristik in bezug auf den gemeinsamen Knoten (18) gleich sind, dadurch gekennzeichnet, daß jede Übergangsschutzvorrichtung (16d, 16a, 16e) desweiteren einen polarisierten parallel zum Übergangsspannungs-Entstörer (20) dieser Übergangsschutzvorrichtung geschalteten Kondensator (22) aufweist, wobei die Richtung der Vorwärtsdiodencharakteristik des Entstörers (20) vom negativen Polaritätsanschluß des Kondensators (22) zu dessen positiven Polaritätsanschluß gerichtet ist.

2. Schutzschaltung nach Anspruch 1, bei welcher jeder der Übergangsspannungs-Entstörer (20) aus einem Varistor mit parallel geschalteter Diode besteht.

3. Schutzschaltung nach Anspruch 1, enthaltend Spannungsstoß-Entstörer, die den jeweiligen Übergangsspannungs-Entstörer nebengeschaltet sind.

4. Schutzschaltung nach Anspruch 3, bei der jeder der Spannungsstoß-Entstörer eine bidirektionale Begrenzungsschaltung ist.

5. Schutzschaltung nach Anspruch 3, bei der jeder der Spannungsstoß-Entstörer eine Gasentladungsröhre ist.

6. Schutzschaltung nach Anspruch 3, bei der jeder der Spannungsstoß-Entstörer ein Varistor ist.

7. Schutzschaltung nach Anspruch 3, bei der jeder der Spannungsstoß-Entstörer ein bidirektionaler Übergangsspannungs-Entstörer ist.

8. Schutzschaltung nach Anspruch 1, bei der jedem Übergangsspannungs-Entstörer (20) eine Diode nebengeschaltet ist, deren Belastbarkeit für Vorwärtsspannungsstöße größer ist als diejenige des Übergangsspannungs-Entstörers, und deren Rückwärtsdurchbruchspannung größer als die Rückwärtsbegrenzungsspannung des Übergangsspannungs-Entstörers ist.

9. Kapazitive Vorrichtungen für eine Wechselstromschaltung, dadurch gekennzeichnet, daß sie zwei polarisierte Kondensatoren (24a, 24b) aufweist, denen jeweils Übergangsspannungs-Entstörer (26a, 26b) parallel geschaltet sind, von denen jeder in einer Richtung eine Vorwärtsdiodencharakteristik und in der anderen Richtung eine Rückwärtsspannungs-Begrenzungscharakteristik hat, wobei die Verbindungen zwischen jedem Übergangsspannungs-Entstörer und dem ihm parallel geschalteten polarisierten Kondensator derart sind, daß die Richtung der Vorwärtsdiodencharakteristik des Übergangsspannungs-Entstörers vom negativen Polaritätsanschluß zum positiven Polaritätsanschluß des zugehörigen Kondensators gerichtet ist, und wobei die Übergangsspannungs-Entstörer (26a, 26b) mit ihren jeweiligen parallelen Kondensatoren (24a, 24b) derart mit einem gemeinsamen Knoten (28) verbunden sind, daß die jeweiligen Richtungen der Vorwärtsdiodencharakteristik der Übergangsspannungs-Entstörer in bezug auf den gemeinsamen Knoten (28) gleich sind.

10. Vorrichtung nach Anspruch 9, bei der die Übergangsspannung-Entstörer (26a, 26b) Hochspannungssilizium-bauteile mit PN-Übergängen sind.

11. Vorrichtung nach Anspruch 9, bei der die Rückwärtsbegrenzungsspannung eines jeden Übergangsspannungs-Entstörers (26a, 26b) größer als die Nennspannung jedes Kondensators (24a, 24b) ist.

12. Vorrichtung nach Anspruch 9, 10 oder 11, bei der die Kondensatoren (24a, 24b) von gleicher Kapazität sind.

*Fig.1*

*Fig.3*

*Fig.2*